(19) Europäisches Patentamt
European Patent Office
Office européen des brevets

(11) **EP 4 641 049 B1**

(12) **EUROPÄISCHE PATENTSCHRIFT**

(45) Veröffentlichungstag und Bekanntmachung des Hinweises auf die Patenterteilung:
**22.04.2026   Patentblatt 2026/17**

(21) Anmeldenummer: **25171378.0**

(22) Anmeldetag: **17.04.2025**

(51) Internationale Patentklassifikation (IPC):
**F16H 25/06** (2006.01)      **F16H 55/08** (2006.01)

(52) Gemeinsame Patentklassifikation (CPC):
**F16H 25/06; F16H 55/08; F16H 55/088; F16H 55/0886**

(54) **GETRIEBE**

TRANSMISSION

TRANSMISSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **23.04.2024   DE 102024111359**

(43) Veröffentlichungstag der Anmeldung:
**29.10.2025   Patentblatt 2025/44**

(73) Patentinhaber: **WITTENSTEIN SE**
**97999 Igersheim (DE)**

(72) Erfinder: **Schreiber, Heiko**
**02692 Doberschau (DE)**

(74) Vertreter: **Zimmermann & Partner**
**Patentanwälte mbB**
**Postfach 330 920**
**80069 München (DE)**

(56) Entgegenhaltungen:
**DE-A1- 102019 129 662      DE-A1- 102019 129 667**
**US-A- 4 308 760**

**Beschreibung**

Gebiet der Erfindung

Die Erfindung betrifft ein Getriebe, einen Zahn für ein Getriebe und ein Verfahren zur Herstellung eines Zahns für ein Getriebe.

Stand der Technik

Aus dem Stand der Technik sind Getriebe bekannt, welche Zähne umfassen, die in einem Zahnträger radial bezüglich einer Drehachse des Getriebes verschieblich gelagert sind. Die Zähne stehen in Wirkbeziehung mit einer Kurvenscheibe, welche eine Profilierung in Umfangsrichtung um die Drehachse aufweist. Die Kurvenscheibe kann insbesondere zum Antrieb der Zähne in radialer Richtung verwendet werden kann. Die Zähne greifen in eine Verzahnung ein, so dass es zu einer Relativbewegung zwischen dem Zahnträger mit den Zähnen und der Verzahnung kommt. Die Relativbewegung zwischen Verzahnung und Zähnen ist dabei üblicherweise um mindestens eine Größenordnung geringer als die Bewegung der Kurvenscheibe mit der Profilierung. Auf diese Weise lassen sich hohe Übersetzungen erzielen, ein Beispiel eines solchen Getriebes ist in der EP 2 129 935 A2 veröffentlicht.

Die DE 10 2019 129667 A1 betrifft ein Getriebe, mit einer Verzahnung, einem Zahnträger mit Führungen, Zähnen, welche in den Führungen zum Eingriff mit der Verzahnung aufgenommen sind, wobei die Zähne in den Führungen in Richtung ihrer Längsachse relativ zu dem Zahnträger verschieblich gelagert sind, und einer Kurvenscheibe zum Antrieb der Zähne entlang der jeweiligen Längsachse der Zähne. Ein Zahn umfasst einen Zahnflankenbereich mit Zahnflanken und einer Zahnspitze des Zahns. Die US 4 308 760 A betrifft ein hochbelastbares Zahnrad. Die DE 10 2019 129662 A1 betrifft ein Koaxialgetriebe.

Allerdings zeigen bekannte Getriebe bei erster Inbetriebnahme ein deutliches Einlaufverhalten. Außerdem können bekannte Getriebe Restriktionen in Bezug auf eine Tragfähigkeit aufweisen.

Offenbarung der Erfindung

Aufgabe der Erfindung ist es, ein Getriebe oder einen Zahn anzugeben, welche gegenüber aus dem Stand der Technik bekannten Getrieben verbessert sind, wobei ein verringertes Einlaufverhalten, ein geringerer Verschleiß oder eine höhere Tragfähigkeit erreicht werden sollen. Weiterhin ist es Aufgabe der Erfindung, ein Verfahren zur Herstellung eines Zahns für ein Getriebe anzugeben.

Die Aufgabe wird mit einem Getriebe nach dem Anspruch 1 und mit einem Zahn und einem Verfahren nach den nebengeordneten Ansprüchen gelöst. Vorteilhafte Weiterbildungen und Ausführungsformen ergeben sich aus den Unteransprüchen und aus dieser Beschreibung.

Ein Aspekt der Erfindung betrifft ein Getriebe gemäß dem unabhängigen Anspruch 1, insbesondere ein Koaxialgetriebe. Das Getriebe umfasst ein Hohlrad mit einer Innenverzahnung. Das Getriebe umfasst einen Zahnträger mit radial bezüglich einer Drehachse des Getriebes ausgerichteten Führungen. Das Getriebe umfasst Zähne, welche in den Führungen zum Eingriff mit der Innenverzahnung aufgenommen sind, wobei die Zähne in den Führungen in Richtung ihrer Längsachse relativ zu dem Zahnträger verschieblich gelagert sind. Das Getriebe umfasst eine um die Drehachse drehbare Kurvenscheibe in Wirkbeziehung mit den Zähnen. Die Zähne können jeweils eine Zahnflanke aufweisen, welche entlang einer über eine Breite der Zahnflanke verlaufenden Breitenkurve zumindest teilweise gekrümmt hergestellt ist. Die Zähne weisen jeweils einen Zahnkopf auf, wobei eine entlang des Zahnkopfs und über eine Zahnbreite verlaufende Zahnkopfbreitenkurve zumindest teilweise in Richtung der Längsachse des Zahns gekrümmt hergestellt ist, wobei die Zahnkopfbreitenkurve auf dem Zahnkopf in einer Ebene der Längsachse und der Zahnbreite verläuft.

Ein weiterer Aspekt der Erfindung betrifft einen Zahn gemäß Anspruch 13. Der Zahn für ein Getriebe gemäß einer der hierin beschriebenen typischen Ausführungsformen kann eine Zahnflanke aufweisen, welche entlang einer über eine Breite der Zahnflanke verlaufenden Breitenkurve zumindest teilweise gekrümmt, insbesondere konvex gekrümmt, hergestellt ist. Der Zahn weist einen Zahnkopf auf, wobei eine entlang des Zahnkopfs und über eine Zahnbreite verlaufende Zahnkopfbreitenkurve zumindest teilweise in Richtung der Längsachse des Zahns gekrümmt, insbesondere konvex gekrümmt, hergestellt ist, wobei die Zahnkopfbreitenkurve auf dem Zahnkopf in einer Ebene der Längsachse und der Zahnbreite verläuft.

Ein weiterer Aspekt der Erfindung betrifft ein Verfahren gemäß Anspruch 14. Das Verfahren zur Herstellung eines Zahns gemäß Anspruch 13 umfasst ein Bereitstellen eines Zahnrohlings des Zahns. Das Verfahren kann ein Herstellen einer Zahnflanke des Zahns umfassen, wobei die Zahnflanke entlang einer über eine Breite der Zahnflanke verlaufenden Breitenkurve zumindest teilweise gekrümmt hergestellt wird. Das Verfahren umfasst ein Herstellen des Zahnkopfs des Zahns.

Typische Ausführungsformen der Erfindung betreffen Getriebe, insbesondere Koaxialgetriebe. Typischerweise umfassen Getriebe der Erfindung eine um eine Drehachse des Getriebes drehbare Kurvenscheibe. Die Kurvenscheibe weist typischerweise eine Profilierung in Umfangsrichtung um die Drehachse auf, beispielsweise eine Profilierung mit mindestens einer Erhebung in radialer Richtung, insbesondere mit mindestens oder genau zwei Erhebungen oder mit mindestens oder genau drei Erhebungen.

Typische Getriebe weisen einen Zahnträger mit radial bezüglich der Drehachse ausgerichteten Führungen auf. Typischerweise ist in den Führungen jeweils ein Zahn gemäß hierin beschriebenen Ausführungsformen aufgenommen. Die Zähne sind typischerweise jeweils in einer Führung in Richtung ihrer Längsachse relativ zu dem Zahnträger verschieblich gelagert. Typischerweise sind die Zähne in dem Zahnträger jeweils in genau einer Richtung verschieblich gelagert, typischerweise in Richtung der Längsachse des Zahnes. Die Führungen des Zahnträgers können beispielsweise jeweils als Schlitz oder Öffnung ausgeführt sein, insbesondere als Schlitz oder Öffnung mit gleichbleibendem Querschnitt in radialer Richtung. Die Zähne sind typischerweise im Zahnträger mit parallel zur Drehachse verlaufendem Zahnkopf eingesetzt.

Bei typischen Ausführungsformen der erfindungsgemäßen Getriebe sind die Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind.

Typische Getriebe weisen ein Hohlrad mit einer Innenverzahnung auf. Typischerweise verlaufen die Flanken der Innenverzahnung dabei parallel zur Drehachse. Typischerweise ist der Zahnträger radial zwischen dem Hohlrad und der Kurvenscheibe angeordnet. Insbesondere kann die Kurvenscheibe radial innen angeordnet sein, beispielsweise um oder auf der Drehachse des Getriebes. Die Begriffe "axial", "radial" und "in Umfangsrichtung" sind hierin, sofern nicht anders angegeben, typischerweise in Bezug auf die Drehachse des Getriebes zu verstehen.

Bei typischen Ausführungsformen ist zwischen den Zähnen und der Profilierung der Kurvenscheibe jeweils ein Schwenksegment angeordnet. Typischerweise sind die Schwenksegmente auf einer Wälzlagerung gelagert, welche auf der Profilierung aufliegt. Die Wälzlagerung kann beispielsweise als Nadelrollenlager ausgebildet sein. Typischerweise ist der Zahn mit dem Schwenksegment lose verbunden. Dabei bedeutet "lose Verbindung" insbesondere, dass das Zahnsegment lediglich auf das Schwenksegment aufgestellt ist, insbesondere direkt aufgestellt ist. Schwenksegmente umfassen typischerweise ein Profil, welches ein Abrutschen des Zahnes von dem Schwenksegment oder ein Verrutschen des Schwenksegments zumindest in einer Richtung verhindert. Ein solches Profil kann beispielsweise ein Wulst sein, welcher in eine Ausnehmung an einem radial inneren Ende des Zahns eingreift. Für eine mögliche Ausführungsform eines Schwenksegments wird auf die DE 10 2015 105 523 A1 verwiesen.

Bei typischen Ausführungsformen steht die Kurvenscheibe in Wirkbeziehung mit den Zähnen. Insbesondere kann die Kurvenscheibe als Antriebselement zum Antrieb der Zähne in radialer Richtung verwendet werden. Bei Drehung der Kurvenscheibe um die Drehachse werden typischerweise die Zähne durch die Profilierung in radialer Richtung bewegt, so dass zu jedem Zeitpunkt ein Teil der Zähne in die Innenverzahnung des Hohlrads eingreift und eine Relativbewegung von Zahnträger und Hohlrad bewirkt. Der Abtrieb des Getriebes kann über den Zahnträger oder das Hohlrad erfolgen.

Typische Ausführungsformen können auch in umgekehrter Übersetzungsrichtung verwendet werden, dabei wird die Kurvenscheibe als Abtriebselement und der Zahnträger als Antriebselement verwendet. Auf diese Weise kann beispielsweise ein Generator über die Kurvenscheibe angetrieben werden, wobei ein den Zahnträger mit niedriger Drehzahl antreibendes Drehmoment ausgenutzt wird. Auch ein Antrieb oder Abtrieb über das Gehäuse, bzw. die Verzahnung des Hohlrads ist möglich.

Typische erfindungsgemäße Getriebe kommen z.B. in der Robotik, in Werkzeugmaschinen, Verpackungsmaschinen, Dreh- oder Fräsmaschinen, Medizintechnik, Logistik, Fahrzeugtechnik, Bauwesen sowie sonstigen industriellen Antriebssträngen zum Einsatz. Im generatorischen Betrieb können diese in Windkraftanlagen oder sonstigen Anlagen zur Energieerzeugung eingesetzt werden.

Besonders vorteilhaft sind diese für Anwendungen mit hohen Anforderungen an Drehmoment- und Leistungsdichte, großem Hohlwellendurchmesser, hoher Steifigkeit, geringem Spiel oder Nullspiel oder Kompaktheit.

Bei typischen Ausführungsformen umfassen die Zähne jeweils einen Zahnrumpf. Typischerweise weist der Zahnrumpf eine Gleitfläche zur Gleitlagerung des Zahns in einer Führung des Zahnträgers auf. Bei typischen Ausführungsformen sind die Zähne jeweils als Einzelzahn ausgebildet, insbesondere als Rundzahn. Ein Rundzahn weist typischerweise einen runden Zahnrumpf auf. Insbesondere kann der Zahnrumpf in Umfangsrichtung um die Längsachse des Zahns rund ausgebildet sein, beispielsweise kreisrund. Bei Ausführungsformen ist der Zahnrumpf zumindest in einem Bereich entlang der Längsachse des Zahns zumindest im Wesentlichen zylinderförmig ausgebildet. Typischerweise weist eine Führung des Zahnträgers eine dem Querschnitt des Zahns entsprechende Öffnung in radialer Öffnung auf, beispielsweise eine runde, insbesondere kreisrunde, Öffnung für einen Rundzahn.

Bei typischen Ausführungsformen umfassen die Zähne jeweils mindestens eine Zahnflanke, insbesondere genau zwei Zahnflanken. Typischerweise ist die mindestens eine Zahnflanke in einem Bereich radial außerhalb des Zahnrumpfes angeordnet. Bei typischen Ausführungsformen weisen die Zähne jeweils einen Zahnkopf auf. Typischerweise ist der Zahnkopf an die Zahnflanke angrenzend vorgesehen und verläuft über eine Zahnbreite des jeweiligen Zahns. Die Zahnbreite des Zahns entspricht der Breite des Zahns in paralleler Richtung zu der Drehachse des Getriebes. Typischerweise entspricht die Zahnbreite des Zahns der Breite des Zahnkopfs. Typischerweise ist der Zahnkopf an einem Ende des Zahns bezüglich der Längsrichtung des Zahns angeordnet, insbesondere an einem radial äußeren Ende des Zahns bezüglich der Drehachse des Getriebes. Bei typischen Ausführungsformen ist die Zahnflanke zu der Längsachse des Zahns geneigt. Beispielsweise können zwei Zahnflanken eines Zahns zumindest im Wesentlichen schräg zu dem Zahnkopf des Zahns hin zulaufen. Typischerweise weist der Zahnkopf eine Oberfläche auf, welche von einer ersten Zahnflanke zu einer zweiten Zahnflanke des Zahns verläuft. Insbesondere kann die Oberfläche des Zahnkopfs mit einem Kopfradius zwischen den zwei Zahnflanken ausgebildet sein.

Bei typischen Ausführungsformen weist eine Zahnflanke oder ein Zahnkopf eine Breite auf. Typischerweise ist unter der Breite einer Zahnflanke oder eines Zahnkopfs die Erstreckung der Zahnflanke oder des Zahnkopfs parallel zu der Drehachse des Getriebes zu verstehen.

Gemäß typischen Ausführungsformen ist die Zahnflanke eines Zahns entlang einer über die Breite der Zahnflanke verlaufenden Breitenkurve zumindest teilweise gekrümmt hergestellt. Typischerweise ist unter einer gekrümmten Breitenkurve eine nicht gerade Breitenkurve zu verstehen, beispielsweise eine bogenförmige Breitenkurve. Insbesondere kann die Zahnflanke in Richtung der Breite der Zahnflanke eine Zahnflankenkorrektur oder Flankenmodifikation gegenüber einem in Richtung der Breite geraden Verlauf einer Zahnflanke aufweisen. Die Zahnflankenkorrektur oder Flankenmodifikation kann insbesondere einer Rücknahme der Zahnflanke gegenüber einem geraden Verlauf der Zahnflanke entlang der Breite der Zahnflanke entsprechen. Ein gekrümmter Verlauf einer der Breitenkurve folgenden Zahnflanke kann hierin auch als Korrektur, Zahnflankenkorrektur oder Flankenmodifikation bezeichnet werden.

Bei Zähnen bekannter Getriebe, wie beispielsweise dem Getriebe gemäß EP 2 129 935 A2, ist der Zahnflankenverlauf in Richtung der Drehachse des Getriebes über die gesamte Breite linear, d.h. entspricht einer Geraden. Bekannte Getriebe können insbesondere ein deutliches Einlaufverhalten aufweisen. Zähne mit Zahnflanken gemäß hierin beschriebenen Ausführungsformen mit gekrümmter Breitenkurve können insbesondere ein Kantentragen der Kanten der Zahnflanken vermeiden oder reduzieren. Das Kantentragen bei bekannten Getrieben entsteht insbesondere durch die gegenüber den Zähnen üblicherweise breiteren und damit steiferen Hohlradzähne des Hohlrads sowie durch ein Ausströmen von Schmierstoff aus dem Kontaktbereich am Rand der Verzahnung. Zahnflanken mit gekrümmter Breitenkurve gemäß hierin beschriebenen Ausführungsformen können insbesondere einen Verschleiß an den Rändern des Verzahnungskontakts zwischen Zahn und Hohlrad vermeiden oder reduzieren, insbesondere Verschleiß während einer Einlaufphase des Getriebes.

Gemäß typischen Ausführungsformen weist die Zahnflanke entlang der Breitenkurve über die Breite der Zahnflanke zwei Randbereiche und zwischen den zwei Randbereichen einen zentralen Bereich auf. Bei Ausführungsformen ist die Zahnflanke in mindestens einem Randbereich der zwei Randbereiche gegenüber dem zentralen Bereich nach innen zurückgenommen. "Innen" bezieht sich hierin auf das Innere des Zahns. Die Zahnflanke kann entlang der Breitenkurve zumindest teilweise konvex ausgebildet sein. Typischerweise krümmt sich die Breitenkurve ausgehend von dem zentralen Bereich in beiden Richtungen der Breite der Zahnflanke zu den Rändern der Zahnflanke nach innen.

Bei typischen Ausführungsformen ist der mindestens eine Randbereich in einer Richtung senkrecht zur Zahnflanke um höchstens 1% einer maximalen Breite der Zahnflanke gegenüber dem zentralen Bereich zurückgenommen, insbesondere um höchstens 0,5% oder höchstens 0,2%. Bei Ausführungsformen ist der mindestens eine Randbereich in einer Richtung senkrecht zur Zahnflanke um mindestens 0,01% einer maximalen Breite der Zahnflanke gegenüber dem zentralen Bereich zurückgenommen, insbesondere um mindestens 0,02%. Typischerweise entsprechen diese Rücknahmen einem maximalen Abtrag an der Flanke gegenüber einem zentralen Bereich oder einem geraden Verlauf der Flanke, insbesondere liegen diese Rücknahmen am äußeren Rand der Zahnflanke vor. Typischerweise entspricht die maximale Breite der Zahnflanke der Breite der Zahnflanke an einem Übergang von der Zahnflanke zu einem Zahnkopf des Zahns.

Bei typischen Ausführungsformen verläuft die Breitenkurve in mindestens einem Randbereich der zwei Randbereiche, insbesondere in beiden Randbereichen, gekrümmt. Bei typischen Ausführungsformen verläuft die Breitenkurve in dem zentralen Bereich der Zahnflanke gerade. Beispielsweise können die zwei Randbereiche jeweils mindestens 10%, insbesondere mindestens 20% oder mindestens 25%, der Breite der Zahnflanke umfassen. Bei Ausführungsformen umfassen die zwei Randbereiche jeweils maximal 40%, insbesondere maximal 35%, der Breite der Zahnflanke. Beispielsweise können die zwei Randbereiche jeweils ungefähr 25% der Breite der Zahnflanke umfassen. Typischerweise umfasst der zentrale Bereich den Anteil der Zahnflanke von einem Randbereich zu dem anderen Randbereich. Typischerweise bezieht sich die prozentuale Angabe der Randbereiche auf die Aufteilung von Randbereichen und zentralem Bereich an dem radial äußeren Ende der Zahnflanke bezüglich der Drehachse des Getriebes, insbesondere am Übergang der Zahnflanke zu dem Zahnkopf. Insbesondere kann der prozentuale Anteil der Randbereiche in anderen Bereichen der Zahnflanke von den prozentualen Angaben abweichen. Beispielsweise kann bei einem Rundzahn die Breite der Randbereiche im Verlauf von dem radial äußeren Ende der Zahnflanke zu dem radial inneren Ende der Zahnflanke kleiner werden und insbesondere auf null absinken. Bei typischen Ausführungsformen weist die Zahnflanke über mindestens 50% der Länge der Zahnflanke, insbesondere über mindestens 60% oder mindestens 70%, jeweils eine zumindest teilweise gekrümmte Breitenkurve gemäß hierin beschriebenen Ausführungsformen auf. Unter der Länge der Zahnflanke ist eine Längserstreckung der Zahnflanke senkrecht zu der Breite der Zahnflanke zu verstehen.

Bei weiteren typischen Ausführungsformen kann der zentrale Bereich eine Breite von 0% der Breite der Zahnflanke aufweisen. Beispielsweise kann der zentrale Bereich eine Linie, insbesondere eine zentrale Linie sein, welche auf der Zahnflanke in einer Längsrichtung der Zahnflanke verläuft. Insbesondere kann die Zahnflanke entlang der Breitenkurve über die gesamte Breite gekrümmt ausgebildet sein, insbesondere über die gesamte Breite ballig ausgebildet sein. Bei Ausführungsformen kann die Zahnflanke insbesondere über die gesamte Länge der Zahnflanke jeweils eine gekrümmte Breitenkurve aufweisen.

Gemäß typischen Ausführungsformen verläuft die Breitenkurve auf der Zahnflanke und in einer zur Zahnflanke senkrechten Schnittebene. Typischerweise verläuft die Breitenkurve in einem zum Kontakt mit der Innenverzahnung des Hohlrads vorgesehenen Bereich der Zahnflanke.

Bei typischen Ausführungsformen verläuft die Breitenkurve symmetrisch bezüglich einer Mitte der Breite der Zahnflanke. Bei Ausführungsformen umfassen die Zähne jeweils eine weitere Zahnflanke. Die Zahnflanke und die weitere Zahnflanke eines Zahns können hierin auch als erste Zahnflanke und zweite Zahnflanke bezeichnet werden. Typischerweise ist die weitere Zahnflanke spiegelsymmetrisch zu der Zahnflanke hergestellt, insbesondere spiegelsymmetrisch bezüglich einer Ebene, welche sich entlang der Längsachse des Zahns und parallel zu der Drehachse des Getriebes erstreckt. Symmetrische Zähne, insbesondere symmetrische Rundzähne, können beispielsweise ohne spezielle Ausrichtung einzelner Zahnflanken verbaut werden und können sich insbesondere im Betrieb um ihre jeweilige Längsachse eindrehen.

Erfindungsgemäß weist ein an die Zahnflanke angrenzender Zahnkopf eine Zahnkopfkorrektur auf. Eine entlang des Zahnkopfs und über die Zahnbreite verlaufende Zahnkopfbreitenkurve ist zumindest teilweise in Richtung der Längsachse des Zahns gekrümmt hergestellt. Die Zahnkopfbreitenkurve verläuft auf dem Zahnkopf in einer Ebene der Längsachse und der Zahnbreite. Insbesondere kann sich die Zahnkopfbreitenkurve im Verlauf von der Mitte des Zahnkopfs entlang der Zahnbreite zum Rand des Zahns zumindest teilweise nach innen krümmen, insbesondere in Richtung der Längsachse des Zahns nach innen, zum Zahnrumpf hin. Es ergibt sich hierdurch entlang der Zahnflanke oder in Zahnbreite eine sich verändernde Zahnkopfhöhe, insbesondere nimmt die Zahnkopfhöhe von der Längsachse aus zum Rand des Zahns hin ab, beispielsweise in Form eines Radius oder einer logarithmischen Funktion. Bei Ausführungsformen entspricht die Form der Zahnkopfbreitenkurve zumindest im Wesentlichen einer Form der Breitenkurve der Zahnflanke. Die Zahnkopfbreitenkurve kann sich durch einen linearen Faktor von einer Breitenkurve auf der Zahnflanke unterscheiden, insbesondere in Abhängigkeit einer Schräge der Zahnflanke zu der Längsachse des Zahns. Die Zahnkopfbreitenkurve kann zumindest teilweise gekrümmt in Form einer logarithmischen Funktion oder einer Radiuskorrektur auf dem Zahnkopf und über die Zahnbreite verlaufen. Insbesondere kann ein gekrümmter Teil der Zahnkopfbreitenkurve in Form einer logarithmischen Funktion oder eines Radius verlaufen. Bei Ausführungsformen verläuft die Zahnkopfbreitenkurve symmetrisch bezüglich einer Mitte der Zahnbreite des Zahns. Typischerweise ist der Zahnkopf spiegelsymmetrisch bezüglich einer bezüglich einer Ebene der Längsachse und der Zahnbreite hergestellt.

Bei typischen Ausführungsformen weist der Zahnkopf entlang der Zahnkopfbreitenkurve über die Zahnbreite des Zahns zwei Randbereiche auf. Typischerweise weist der Zahnkopf zwischen den zwei Randbereichen einen zentralen Bereich auf. Typischerweise ist der Zahnkopf in mindestens einem Randbereich der zwei Randbereiche gegenüber dem zentralen Bereich nach innen zurückgenommen. Beispielsweise können die zwei Randbereiche des Zahnkopfs jeweils mindestens 10%, insbesondere mindestens 20% oder mindestens 25%, oder maximal 40%, insbesondere maximal 35%, der Zahnbreite umfassen, beispielsweise jeweils ungefähr 25%. Der zentrale Bereich kann den gesamten Bereich zwischen den zwei Randbereichen umfassen. Bei Ausführungsformen verläuft die Zahnkopfbreitenkurve in mindestens einem Randbereich gekrümmt. Die Zahnkopfbreitenkurve kann in einem zentralen Bereich gerade verlaufen. Bei weiteren typischen Ausführungsformen kann der zentrale Bereich des Zahnkopfs eine Breite von 0% der Zahnbreite aufweisen. Bei Ausführungsformen können die Randbereiche und der zentrale Bereich des Zahnkopfs den Randbereichen und dem zentralen Bereich der Zahnflanke entsprechen.

Typischerweise ist der Zahnkopf, insbesondere eine Höhe des Zahnkopfs, in mindestens einem Randbereich des Zahns, insbesondere in beiden Randbereichen, gegenüber einer maximalen Höhe des Zahnkopfs in Richtung der Längsachse des Zahns zurückgenommen. Der Zahnkopf weist die maximale Höhe typischerweise in dem zentralen Bereich des Zahns auf, insbesondere in einem zentralen Bereich um die Längsachse. Unter der Höhe des Zahnkopfs ist hierin die Erstreckung des Zahnkopfs in Richtung der Längsachse des Zahns zu verstehen. Typischerweise ist der Zahnkopf in dem mindestens einen Randbereich um mindestens 0,02% oder um höchstens 2% der Zahnbreite gegenüber einer maximalen Höhe des Zahnkopfs oder gegenüber einem geraden Verlauf des Zahnkopfs in Richtung der Längsachse zurückgenommen. Bei typischen Ausführungsformen ist der Zahnkopf durch Schleifen hergestellt, insbesondere durch ein Schleifen wie für die Zahnflanken hierin beschrieben.

Bei typischen Ausführungsformen kann eine Rücknahme der Zahnflanke oder des Zahnkopfs zum Rand der Zahnflanke hin zunehmen. Zum Beispiel kann der Korrekturbetrag am Rand der Zahnflanke stärker ausgebildet sein, um ein Kantentragen zu verhindern. Insbesondere kann ein Kantentragen auch bei höheren Pressungen im Betrieb oder auch bei stärkeren elastischen Einfederungen bzw. Abplattungen der Zahnflanke im Kontakt mit der Innerverzahnung verhindert werden.

Gemäß typischen Ausführungsformend entspricht ein gekrümmter Teil der Breitenkurve einer logarithmischen Funktion oder einer Radiuskorrektur. Insbesondere kann die logarithmische Funktion oder die Radiuskorrektur eine Rücknahme der Zahnflanke entlang der Breitenkurve beschreiben. Beispielsweise kann ein gekrümmter Teil der Breitenkurve einer logarithmischen Funktion gemäß der Formel (1) unten entsprechen. Darin und in weiteren hierin beschriebenen Ausführungsformen sind Richtungen in Bezug auf ein orthogonales x,y,z-Koordinatensystem für einen jeweiligen Zahn angegeben. Das x,y,z-Koordinatensystem kann insbesondere einem Maschinenkoordinatensystem zur Herstellung des Zahns entsprechen. Eine x-Achse ist in Richtung der Breite der Zahnflanke oder des Zahnkopfes ausgerichtet, insbesondere parallel zu der Drehachse des Getriebes. Eine y-Achse ist parallel zu einer Längsachse des Zahns ausgerichtet, insbesondere in radialer Richtung des Getriebes. Die z-Achse ist senkrecht zur x-Achse und senkrecht zur y-Achse ausgerichtet, insbesondere senkrecht zur Breite der Zahnflanke oder des Zahnkopfs und senkrecht zu der Längsachse des Zahns.

Bei typischen Ausführungsformen sind die Zahnflanken der Zähne durch Schleifen hergestellt, insbesondere durch Profilschleifen, beispielsweise durch diskontinuierliches Profilschleifen. Das Schleifen kann gemäß hierin beschriebenen Ausführungsformen erfolgen, insbesondere wie in Zusammenhang mit hierin beschriebenen typischen Verfahren zur Herstellung eines typischen Zahns erläutert. Die Formel (1) unten gibt insbesondere eine logarithmische Funktion an, welche einen Korrekturbetrag $dy(x)$ für eine Zustellung einer Schleifscheibe einer Profilschleifmaschine in y-Richtung angibt. Durch eine Änderung der Zustellung in y-Richtung in Abhängigkeit der x-Position können insbesondere die Zahnflanke und der Zahnkopf mit einer gekrümmten Breitenkurve der Zahnflanke und einer gekrümmten Zahnkopfbreitenkurve des Zahnkopfes hergestellt werden.

$$dy(x) = b_{profil} \cdot \ln \left\{ \frac{1}{1 - \left[ \frac{x - x_{start}}{x_{ende} - x_{start}} \right]^2} \right\} \qquad \text{Formel (1)}$$

Formel (1) oben beschreibt den Korrekturbetrag bzw. eine Breitenkurve oder Zahnkopfbreitenkurve von der Mitte der Zahnflanke oder des Zahnkopfes ausgehend in eine Richtung der Breite. Die Breitenkurve kann insbesondere in die andere Richtung der Breite bezüglich der Mitte der Zahnflanke oder des Zahnkopfes symmetrisch ausgebildet sein. In Formel (1) bezeichnet $b_{profil}$ einen Korrekturfaktor, insbesondere eine Konstante. Weiter bezeichnet x die x-Position entlang der Breite der Zahnflanke oder des Zahnkopfes, insbesondere bezüglich der Mitte der Zahnflanke oder des Zahnkopfes als Nullpunkt, wobei x kleiner als $x_{ende}$ ist.

$x_{start}$ bezeichnet den Startpunkt der Korrektur in x-Richtung, insbesondere den Startpunkt des logarithmisch gekrümmten Anteils der Breitenkurve. Typischerweise entspricht $x_{start}$ dem Beginn eines Randbereichs, in welchem die Breitenkurve gekrümmt ausgebildet ist. Wie in Bezug auf weitere Ausführungsformen hierin beschrieben, kann $x_{start}$ bei typischen Ausführungsformen auch gleich null sein, so dass die Breitenkurve von der Mitte ausgehend gekrümmt ausgebildet ist, insbesondere über die gesamte Breite der Zahnflanke oder des Zahnkopfes gekrümmt ausgebildet ist.

$x_{ende}$ bezeichnet den Endpunkt der Korrektur in x-Richtung, insbesondere eine x-Position außerhalb des Randes der Zahnflanke oder des Zahnkopfs, beispielsweise leicht außerhalb des Randes der Zahnflanke oder des Zahnkopfs. Insbesondere ist $x_{ende}$ typischerweise so zu wählen, dass x-Positionen auf der Zahnflanke ungleich $x_{ende}$ sind. Typischerweise ist $x_{ende}$ größer x für alle x-Positionen auf der Zahnflanke, so dass insbesondere das Ende der Korrekturkurve außerhalb der Zahnflanke liegt.

Bei typischen Ausführungsformen ist eine auf der Zahnflanke und zu der Breite der Zahnflanke senkrecht verlaufende Längskurve zumindest teilweise gekrümmt. Die Längskurve kann beispielsweise in Form einer logarithmischen Spirale oder mit einem Radius ausgeführt sein. Eine Ausgestaltung eines Zahns umfassend eine Zahnflanke mit einer Längskurve in Form einer logarithmischen Spirale ist beispielsweise in der EP 2 129 935 A2 beschrieben. Die Schräge der Zahnflanke zu der Längsachse des Zahns kann sich entlang der zumindest teilweise gekrümmt verlaufenden Längskurve ändern. Bei typischen Ausführungsformen ist eine die Breitenkurve beschreibende Funktion abhängig von einer Position entlang der Längsachse (y-Achse) des Zahns. Insbesondere kann eine Funktion, welche den Verlauf der Breitenkurve auf der Zahnflanke und in einer zur Zahnflanke senkrechten Schnittebene beschreibt, abhängig von einer lokalen Schräge der Zahnflanke zu der Längsachse des Zahns sein.

Gemäß der Erfindung ist ein Verfahren zur Herstellung eines Zahns für ein hierin beschriebenes Getriebe angegeben. Das Verfahren umfasst ein Bereitstellen eines Zahnrohlings des Zahns. Der Zahnrohling kann beispielsweise ein Rundzahnrohling sein. Insbesondere kann der Zahnrohling zylinderförmig ausgebildet sein.

Typische Verfahren umfassen ein Herstellen einer Zahnflanke des Zahns, wobei die Zahnflanke entlang einer über eine Breite der Zahnflanke verlaufenden Breitenkurve zumindest teilweise gekrümmt hergestellt wird. Die Zahnflanke kann mit einer Breitenkurve gemäß hierin beschriebenen Ausführungsformen ausgebildet werden. Das Verfahren umfasst ein Herstellen eines Zahnkopfs mit einer Zahnkopfbreitenkurve nach hierin beschriebenen Ausführungsformen. Bei Ausführungsformen wird mit der Zahnflanke auch der Zahnkopf hergestellt.

Gemäß typischen Ausführungsformen umfasst das Herstellen der Zahnflanke oder des Zahnkopfs ein Schleifen des Zahnrohlings. Insbesondere kann die Zahnflanke oder der Zahnkopf mittels einer Schleifscheibe geschliffen werden. Typischerweise umfasst das Schleifen des Zahnrohlings ein Zustellen der Schleifscheibe in Richtung einer Längsachse des Zahnrohlings. Insbesondere kann die Zustellung in y-Richtung gemäß einem hierin beschriebenen x,y,z-Koordinatensystem erfolgen. Die Schleifscheibe rotiert typischerweise um eine Achse parallel zu der z-Achse. Typischerweise umfasst das Schleifen des Zahnrohlings ein Ändern der Zustellung der Schleifscheibe in Richtung der Längsachse des Zahnrohlings (y-Richtung) in Abhängigkeit der Position der Schleifscheibe entlang der Zahnbreite oder der Breite der Zahnflanke (x-Richtung). Beispielsweise kann die Änderung der Zustellung um einen Korrekturbetrag dy(x) gemäß Formel (1) erfolgen. In Ausführungsformen kann die Zustellung in y-Richtung, welche von einer Schleifmaschine ausgeführt wird, von einem Durchmesser D einer Schleifscheibe der Schleifmaschine abhängen, wobei die Schleifscheibe zum Schleifen der Zahnflanke oder des Zahnkopfs eingerichtet ist. Insbesondere kann die von der Schleifmaschine ausgeführte Zustellung eine Funktion f der Position der Schleifscheibe in x-Richtung und des Durchmessers D sein: y=f(x,D). Die Funktion f kann beispielsweise den Korrekturbetrag dy(x) beinhalten. Typischerweise ergeben sich bei einer Zustellung in y-Richtung die höchsten Genauigkeiten, etwa Korrekturbeträge im unteren $\mu$m-Bereich. Bei weiteren typischen Ausführungsformen kann eine Zustellung in z-Richtung, insbesondere in Richtung der Drehachse der Schleifscheibe erfolgen, oder eine Verdrehung des Zahns, insbesondere eines Rundzahns, um seine Längsachse (um die y-Achse) während der Schleifbearbeitung.

Gemäß typischen Ausführungsformen werden die Zahnflanke und insbesondere der Zahnkopf durch Profilschleifen hergestellt. Typischerweise ist die Schleifscheibe zum Schleifen der Zahnflanke und insbesondere des Zahnkopfs als profilierte Schleifscheibe ausgebildet. Bei einer profilierten Schleifscheibe ist insbesondere das Zahnprofil im Negativ abgerichtet. Bei Ausführungsformen umfasst das Verfahren ein Schleifen einer weiteren Zahnflanke, insbesondere durch ein diskontinuierliches Profilschleifen. Insbesondere kann die Zahnflanke, insbesondere die Zahnflanke und der Zahnkopf, in einem ersten Schleifvorgang mittels der profilierten Schleifscheibe hergestellt werden. In einem zweiten Schleifvorgang kann die weitere Zahnflanke mittels der profilierten Schleifscheibe hergestellt werden, beispielsweise nach Drehung des Zahns relativ zu der Schleifscheibe um 180°.

Typischerweise umfasst das Verfahren zum Herstellen eines Zahns weitere Verfahrensschritte zum Herstellen weiterer Merkmale eines Zahns. Beispielsweise kann eine Zahnbasis an dem radial inneren Ende des Zahns bearbeitet werden. Die weiteren Verfahrensschritte können vor oder nach dem Herstellen der Zahnflanke oder des Zahnkopfs erfolgen.

Gemäß einem nicht zur Erfindung gehörenden Aspekt wird ein Verfahren zum Herstellen eines Getriebes nach hierin beschriebenen Ausführungsformen angegeben, mit Herstellen einer Mehrzahl von Zähnen gemäß hierin beschriebenen typischen Verfahren. Weiter umfasst das Verfahren ein Bereitstellen weiterer Bauteile eines hierin beschriebenen Getriebes, etwa einer Kurvenscheibe, eines Zahnträgers oder eines Hohlrads. Das Verfahren umfasst eine Montage der Zähne und der weiteren Bauteile zu einem Getriebe gemäß hierin beschriebenen Ausführungsformen.

Typische Ausführungsformen des Getriebes können gegenüber dem Stand der Technik den Vorteil bieten, dass ein Kantentragen der Zahnflanken reduziert oder vermieden werden kann. Typische Getriebe können ein verringertes Einlaufverhalten zeigen. Zähne mit zumindest teilweise gekrümmter Breitenkurve können insbesondere einen geringeren Einlaufverschleiß im Betrieb aufweisen. Insbesondere kann eine gemäß hierin beschriebenen Ausführungsformen hergestellte Zahnflanke einen Verschleiß im Betrieb vorwegnehmen. Weiter können Ausführungsformen eine höhere Tragfähigkeit aufweisen, insbesondere eine hohe hydrodynamische Tragfähigkeit des Kontakts zwischen Zähnen und Innenverzahnung des Hohlrads mit geringen Festkörpertraganteilen. Typische Verfahren können insbesondere eine vorteilhafte Herstellung von Zähnen mit hierin beschriebenen Zahnflanken bereitstellen.

Kurze Beschreibung der Zeichnungen

Nachfolgend wird die Erfindung anhand der beiliegenden Zeichnungen näher erläutert, wobei die Figuren zeigen:

Fig. 1    einen Ausschnitt einer Ausführungsform eines typischen Getriebes in einer schematischen Schnittansicht;

Fig. 2    einen Zahn einer typischen Ausführungsform in einer schematischen Ansicht;

Fig. 3    den Zahn der Fig. 2 in einer Seitenansicht;

Fig. 4    einen Graphen, welcher den Verlauf eines Korrekturbetrags dy(x) für eine Zahnflanke in einem Randbereich der Zahnflanke darstellt, wobei der Nullpunkt des Graphen in der Mitte der Breite der Zahnflanke liegt; und

Fig. 5    ein Flussdiagramm eines Verfahrens zum Herstellen eines Zahns gemäß einer typischen Ausführungsform.

Beschreibung von Ausführungsbeispielen

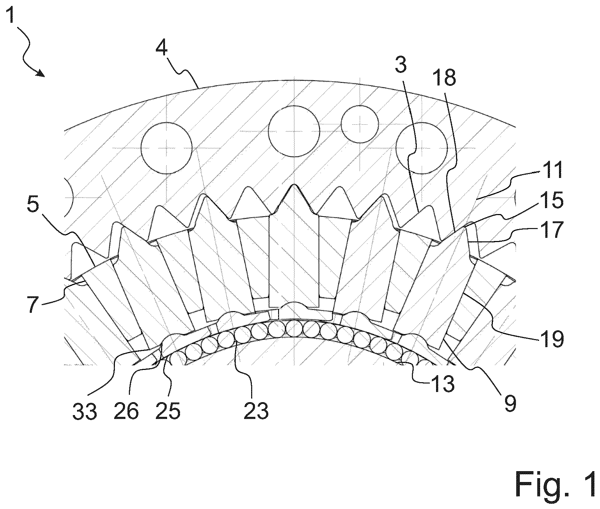

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Zur Übersichtlichkeit sind teilweise nicht alle jeweiligen Merkmale mit einem Bezugszeichen versehen, beispielsweise die Zähne (Bezugszeichen 9 in der Fig. 1).

In der Fig. 1 ist ein Ausschnitt einer typischen Ausführungsform eines Getriebes 1 in einer schematischen Schnittansicht (Radialschnitt) dargestellt. Die Fig. 1 zeigt das Getriebe 1 mit Zähnen 9, welche verschieblich in Führungen 7 eines Zahnträgers 5 aufgenommen sind. Die Zähne 9 sind typischerweise gemäß hierin beschriebenen Ausführungsformen ausgebildet. Der Zahnträger 5 ist zwischen einer Innenverzahnung 3 eines Hohlrads 4 und einer Kurvenscheibe 13 angeordnet. **In** der Fig. 1 sind die Führungen 7 radial ausgerichtet und die Zähne 9 linear radial verschieblich in den Führungen 7 gelagert. Insbesondere sind die Zähne 9 entlang ihrer jeweiligen Längsachse 11 verschieblich. Die Zähne 9 können zum Eingriff mit einer Innenverzahnung 3 des Hohlrads 4 radial verschoben werden.

Die Kurvenscheibe 13 dient in dem Getriebe 1 der Fig. 1 als Antriebselement des Getriebes 1. Die Kurvenscheibe 13 weist eine Profilierung in Umfangsrichtung der Kurvenscheibe 13 auf. Die Profilierung weist in Fig. 1 einen Verlauf mit zwei Erhebungen über den Umfang auf, so dass jeweils gegenüberliegende Zähne 9 am weitesten und gleich tief in die Innenverzahnung 3 eingreifen. Bei weiteren Ausführungsformen kann die Kurvenscheibe nur eine oder mehr als zwei Erhebungen aufweisen.

In der beispielhaften Ausführungsform der Fig. 1 verläuft die Drehachse (nicht gezeigt) der Kurvenscheibe 13 senkrecht zu der Abbildungsebene der Fig. 1. Die Kurvenscheibe 13 ist bezüglich der Drehachse der Kurvenscheibe 13 radial innerhalb der Zähne 9 angeordnet und die Innenverzahnung 3 des Hohlrads 4 bezüglich der Drehachse der Kurvenscheibe 13 radial außerhalb der Zähne 9 angeordnet. Bei einer solchen Konfiguration wird der Abtrieb an dem Hohlrad 4 oder an dem Zahnträger 5 abgegriffen, wobei das jeweils andere Element festgelegt wird. Bei weiteren Ausführungsformen kann der Antrieb des Getriebes über das Hohlrad oder über den Zahnträger erfolgen, und der Abtrieb über die Kurvenscheibe.

Das Getriebe 1 umfasst eine segmentierte Lagerung für die Zähne 9. Die segmentierte Lagerung umfasst Schwenksegmente 25, welche jeweils auf der dem Zahn 9 zugewandten Seite eine runde Zahnlagerfläche 26 aufweisen. Die Zahnlagerfläche 26 bildet einen Wulst, auf dem eine Zahnbasis 33 eines Zahns 9 angeordnet ist, welche an einem radial inneren Ende des Zahns 9 vorgesehen ist. Der Wulst verhindert zusammen mit einer entsprechenden Ausnehmung in der Zahnbasis 33 des jeweiligen Zahnes 9 ein Verrutschen des Zahnes 9 gegenüber dem Schwenksegment 25. Die Schwenksegmente 25 sind über Wälzkörper 23, in Fig. 1 Nadelrollen, auf der Kurvenscheibe 13 gelagert.

In der Fig. 1 umfasst ein Zahn 9 jeweils zwei Zahnflanken, insbesondere eine Zahnflanke 17 und eine weitere Zahnflanke 18, welche in Längsrichtung des Zahns 9 auf einen Zahnkopf 15 des Zahns 9 zulaufen. Die Zahnflanken und der Zahnkopf 15 sind an einem radial äußeren Ende des Zahns 9 zum Eingriff mit der Innenverzahnung 3 vorgesehen. Zwischen den Zahnflanken und der Zahnbasis 33 des Zahns 9 weist der Zahn 9 einen Zahnrumpf 19 auf, welcher in einer Führung 7 des Zahnträgers 4 verschieblich gelagert ist.

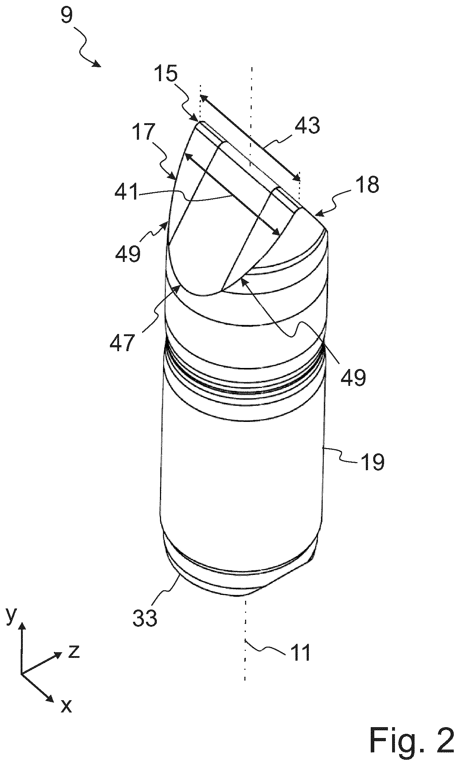

Fig. 2 zeigt eine schematische Ansicht eines Zahns 9 gemäß einer typischen Ausführungsform. Der Zahn 9 ist als Einzelzahn, insbesondere als Rundzahn, ausgeführt. Der Zahn 9 umfasst insbesondere eine Zahnflanke 17, eine weitere Zahnflanke 18 und einen zwischen den Zahnflanken vorgesehenen Zahnkopf 15. Der Zahnkopf 15 ist mit einem Kopfradius zwischen den Zahnflanken ausgebildet. Die Zahnflanke 17 und die weitere Zahnflanke 18 sind symmetrisch bezüglich einer Ebene ausgebildet, welche die Längsachse 11 (y-Richtung) des Zahns 9 umfasst und parallel zu einer Zahnbreite 43 (x-Richtung) des Zahns 9 verläuft. **In** einem typischen Getriebe 1 ist die Zahnbreite 43 des Zahns 9 parallel zu der Drehachse des Getriebes 1 ausgerichtet und die Längsachse 11 radial bezüglich der Drehachse.

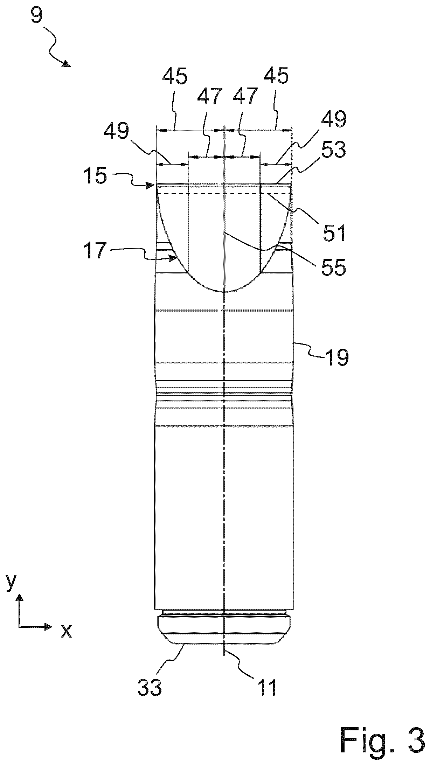

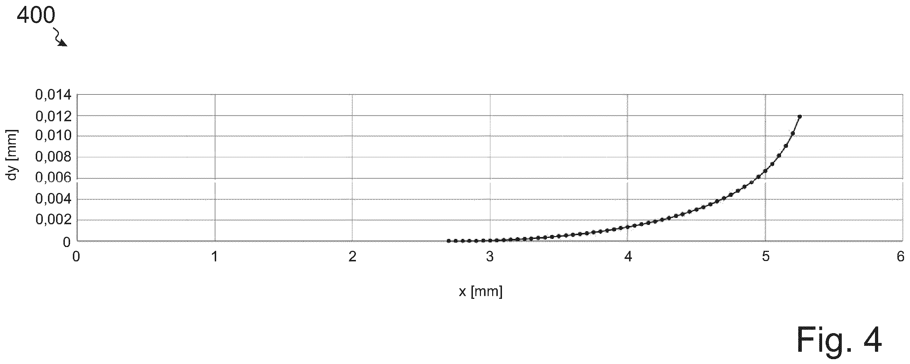

Die Zahnflanke 17 weist in Richtung der Breite 41 der Zahnflanke 17 zwei Randbereiche 49 und zwischen den zwei Randbereichen 49 einen zentralen Bereich 47 auf. Fig. 3 zeigt den Zahn 9 in einer Seitenansicht. Die Zahnflanke 17 ist insbesondere symmetrisch bezüglich einer mittigen Längskurve 55 der Zahnflanke 17 ausgebildet. Die Zahnflanke 17 verläuft entlang einer Breitenkurve 51 über die Breite 41 der Zahnflanke 17 zumindest teilweise gekrümmt. In Figuren 2 und 3 verläuft die Zahnflanke 17 in den Randbereichen 49 in Richtung der Breite 41 der Zahnflanke 17 gekrümmt, beispielsweise wie in Zusammenhang mit Fig. 4 unten erläutert. Insbesondere weist die Zahnflanke 17 in den Randbereichen 49 eine Korrektur in Form einer Rücknahme der Zahnflanke 17 nach innen gegenüber dem zentralen Bereich 47 der Zahnflanke 17 auf. In dem zentralen Bereich 47 verläuft die Breitenkurve 51 gerade. Bei weiteren typischen Ausführungsformen kann die Breitenkurve über die gesamte Breite der Zahnflanke gekrümmt ausgeführt sein. Entlang der Längskurve 55 ist die Zahnflanke in Figuren 2 und 3 gekrümmt ausgebildet, insbesondere in Form einer logarithmischen Spirale.

Der Zahnkopf 15 weist in den Randbereichen 49 ebenfalls eine Rücknahme gegenüber dem zentralen Bereich 47 auf. Die Rücknahme in den Randbereichen 49 ist dabei in Richtung der Längsachse 11 des Zahns 9 ausgebildet, so dass der Verlauf des Zahnkopfs 15, insbesondere die Höhe des Zahnkopfs 15 in Richtung der Längsachse 11, ausgehend von der Mitte des Zahns 9 zum Rand des Zahnkopfs 15 hin abfällt. Die Rücknahme am Zahnkopf 15 entspricht in der Form der Korrektur der Zahnflanke 17. Insbesondere verläuft eine in Richtung der Zahnbreite 43 verlaufende Zahnkopfbreitenkurve 53 in den Randbereichen 49 gekrümmt, insbesondere in der Form einer logarithmischen Funktion. Bei weiteren typischen Ausführungsformen kann die Zahnkopfbreitenkurve über die gesamte Breite der Zahnflanke gekrümmt ausgeführt sein.

Fig. 4 zeigt einen Graphen 400, welcher eine logarithmische Funktion gemäß der hierin beschriebenen Formel (1) angibt. Die logarithmische Funktion gibt insbesondere Korrekturbeträge $dy(x)$ für die Zustellung einer Schleifscheibe in y-Richtung zum Herstellen der Zahnflanke 17 des in Figuren 2 und 3 dargestellten Zahns 9 an. Insbesondere entsprechen die x- und y-Richtungen des Graphen 400 dem in Figuren 2 und 3 dargestellten orthogonalen x,y,z-Koordinatensystem. Der Graph 400 zeigt dabei die Korrekturbeträge für x-Positionen lediglich für eine halbe Zahnbreite 45 (siehe Fig. 3). Der Nullpunkt des Graphen 400 liegt in der Mitte der Zahnbreite 43. Der Zahn 9 weist beispielsweise eine Zahnbreite 43 von 10,5 mm auf. Wie in Fig. 4 dargestellt, weist die Zahnflanke 17 die Korrektur in einem Randbereich ab $x_{start}$=2,7 mm bis zum Rand der Zahnflanke bei $x_{ende}$=5,25 mm auf. Der Randbereich umfasst ungefähr 25% der Zahnbreite 43 des Zahns 9. In der Herstellung der Zahnflanke 17 wird eine Schleifscheibe in Abhängigkeit von der x-Position um den Korrekturbetrag $dy(x)$ näher an den Zahnrohling zugestellt, um eine Rücknahme der Zahnflanke 17 und des Zahnkopfs 15 in Form einer logarithmischen Funktion entlang der Breite 41 der Zahnflanke 17 herzustellen. Die dadurch hergestellte Zahnkopfbreitenkurve 53 entspricht ebenfalls der dargestellten logarithmischen Funktion.

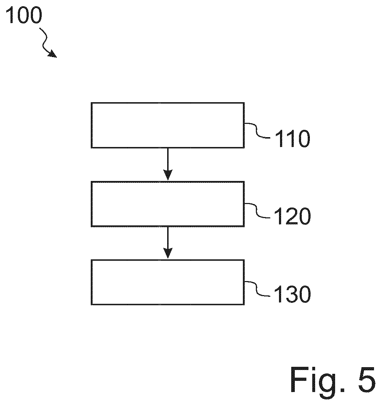

Fig. 5 zeigt ein Flussdiagramm eines typischen Verfahrens 100 zur Herstellung eines Zahns 9 für ein Getriebe 1. Bei Block 110 umfasst das Verfahren 100 ein Bereitstellen eines Zahnrohlings, insbesondere eines zylindrischen Zahnrohlings zur Herstellung eines Rundzahns mit zwei Zahnflanken durch diskontinuierliches Profilschleifen.

Bei Block 120 umfasst das Verfahren 100 ein Herstellen einer Zahnflanke 17 des Zahns 9, wobei die Zahnflanke 17 entlang einer über eine Breite 41 der Zahnflanke 17 verlaufenden Breitenkurve 51 zumindest teilweise gekrümmt hergestellt wird. Zur Herstellung der Zahnflanke 17 wird eine profilierte Schleifscheibe verwendet, welche das Profil der Zahnflanke 17 und des Zahnkopfes 15 abbildet. Die profilierte Schleifscheibe wird bei Block 120 in y-Richtung zugestellt, wobei die Zustellung in Abhängigkeit der Position der Schleifscheibe entlang der Zahnbreite 43 (x-Richtung) um einen Korrekturbetrag geändert wird, beispielweise um einen Korrekturbetrag $dy(x)$ gemäß Formel (1) oder wie in Fig. 4 dargestellt. Mit der Korrektur der Zahnflanke 17 wird auch der Zahnkopf 15 mit einer entsprechende Rücknahme entlang einer Zahnkopfbreitenkurve 53 des Zahnkopfs 15 hergestellt.

Bei Block 130 umfasst das Verfahren 100 ein Herstellen einer weiteren Zahnflanke 18 des Zahns 9. Insbesondere werden der Zahnrohling und die Schleifscheibe um 180° relativ zueinander um die Längsachse 11 (y-Richtung) des Zahns 9 gedreht. Die weitere Zahnflanke 18 wird mittels Profilschleifen unter Verwendung der Schleifscheibe analog zu der Zahnflanke 17 hergestellt. Ein derart hergestellter Zahn 9 kann bei Verwendung in einem Getriebe 1 insbesondere einen geringeren Verschleiß in der Einlaufphase des Getriebes aufweisen.

**Patentansprüche**

1.  Getriebe (1), insbesondere Koaxialgetriebe, umfassend

    - ein Hohlrad mit einer Innenverzahnung (3),
    - einen Zahnträger (5) mit radial bezüglich einer Drehachse des Getriebes ausgerichteten Führungen (7),
    - Zähne (9), welche in den Führungen (7) zum Eingriff mit der Innenverzahnung (3) aufgenommen sind, wobei die Zähne (9) in den Führungen (7) in Richtung ihrer Längsachse (11) relativ zu dem Zahnträger (5) verschieblich gelagert sind, und
    - eine um die Drehachse drehbare Kurvenscheibe (13) in Wirkbeziehung mit den Zähnen (9),
    - wobei die Zähne (9) jeweils einen Zahnkopf (15) aufweisen, wobei eine entlang des Zahnkopfs (15) und über eine Zahnbreite (43) des Zahns (9) verlaufende Zahnkopfbreitenkurve (53) zumindest teilweise in Richtung der Längsachse (11) des Zahns gekrümmt hergestellt ist, wobei die Zahnkopfbreitenkurve (53) auf dem Zahnkopf (15) in einer Ebene der Längsachse (11) und der Zahnbreite (43) verläuft.

2.  Getriebe (1) nach Anspruch 1, wobei ein gekrümmter Teil der Zahnkopfbreitenkurve (51) in Form einer logarithmischen Funktion oder eines Radius verläuft.

3.  Getriebe (1) nach Anspruch 1 oder 2, wobei der Zahnkopf (15) in einem Randbereich des Zahns (9) um mindestens 0,02% und/oder höchstens 2% der Zahnbreite gegenüber einer maximalen Höhe des Zahnkopfs (15) in Richtung der Längsachse (11) des Zahns (9) zurückgenommen ist, wobei der Zahnkopf (15) die maximale Höhe in einem bezüglich der Zahnbreite (43) zentralen Bereich (47) des Zahnkopfs (15) aufweist.

4.  Getriebe (1) nach einem der vorhergehenden Ansprüche, wobei die Zähne (9) jeweils eine Zahnflanke (17) aufweisen, welche entlang einer über eine Breite (41) der Zahnflanke (17) verlaufenden Breitenkurve (51) zumindest teilweise gekrümmt hergestellt ist.

5.  Getriebe (1) nach Anspruch 4, wobei die Zahnflanke (17) entlang der Breitenkurve (51) über die Breite (41) der Zahnflanke (17) zwei Randbereiche (49) und zwischen den zwei Randbereichen (49) einen zentralen Bereich (47) aufweist, wobei die Zahnflanke (17) in mindestens einem Randbereich der zwei Randbereiche (49) gegenüber dem zentralen Bereich (47) nach innen, bezogen auf das Innere des Zahns (3), zurückgenommen ist, wobei insbesondere der mindestens eine Randbereich in einer Richtung senkrecht zur Zahnflanke um höchstens 1% einer maximalen Breite der Zahnflanke (17) gegenüber dem zentralen Bereich (47) zurückgenommen ist.

6.  Getriebe (1) nach Anspruch 5, wobei die Breitenkurve (51) in mindestens einem Randbereich der zwei Randbereiche (49) gekrümmt verläuft und in dem zentralen Bereich (47) der Zahnflanke (17) gerade verläuft.

7.  Getriebe (1) nach einem der Ansprüche 5 oder 6, wobei die zwei Randbereiche (49) jeweils mindestens 10% und/oder maximal 40% der Breite (41) der Zahnflanke (17) umfassen.

8.  Getriebe (1) nach einem der Ansprüche 4 bis 7, wobei die Breitenkurve (51) symmetrisch bezüglich einer Mitte der Breite (41) der Zahnflanke (17) verläuft, und/oder wobei die Zähne (9) jeweils eine weitere Zahnflanke umfassen, wobei die weitere Zahnflanke spiegelsymmetrisch zu der Zahnflanke (17) hergestellt ist.

9.  Getriebe (1) nach einem der Ansprüche 4 bis 8, wobei ein gekrümmter Teil der Breitenkurve (51) einer logarithmischen Funktion oder einer Radiuskorrektur entspricht.

10. Getriebe (1) nach einem der Ansprüche 4 bis 9, wobei die Breitenkurve (51) auf der Zahnflanke (17) und in einer zur Zahnflanke senkrechten Schnittebene verläuft.

11. Getriebe (1) nach einem der Ansprüche 4 bis 10, wobei die Zahnflanken der Zähne (9) durch Schleifen hergestellt sind.

12. Getriebe (1) nach einem der Ansprüche 4 bis 11, wobei eine auf der Zahnflanke (17) und zu der Breite (41) der Zahnflanke (17) senkrecht verlaufenden Längskurve (55) zumindest teilweise gekrümmt ist.

13. Zahn (9) für ein Getriebe (1) nach einem der vorhergehenden Ansprüche,

    - wobei der Zahn (9) einen Zahnkopf (15) aufweist, wobei eine entlang des Zahnkopfs (15) und über eine Zahnbreite (43) des Zahns (9) verlaufende Zahnkopfbreitenkurve (53) zumindest teilweise in Richtung der Längsachse (11) des Zahns (9) gekrümmt, insbesondere konvex gekrümmt, hergestellt ist, wobei die Zahnkopfbreitenkurve (53) auf dem Zahnkopf (15) in einer Ebene der Längsachse (11) und der Zahnbreite (43) verläuft.

14. Verfahren (100) zur Herstellung eines Zahns (9) nach Anspruch 13, mit

    - Bereitstellen eines Zahnrohlings des Zahns (9); und
    - Herstellen des Zahnkopfs (15) des Zahns (9).

15. Verfahren (100) nach Anspruch 14, wobei das Herstellen des Zahnkopfs (15) ein Schleifen des Zahnrohlings umfasst, mit:

    - Zustellen einer Schleifscheibe in Richtung einer Längsachse des Zahnrohlings;
    - Ändern der Zustellung der Schleifscheibe in Richtung der Längsachse des Zahnrohlings in Abhängigkeit der Position der Schleifscheibe entlang der Zahnbreite (43).

**Claims**

1. Gear mechanism (1), in particular a coaxial gear mechanism, comprising

   - a ring gear with internal toothing (3),
   - a tooth carrier (5) with guides (7) radially aligned with respect to an axis of rotation of the gear mechanism,
   - teeth (9) which are received in the guides (7) for engagement with the internal toothing (3), wherein the teeth (9) are mounted in the guides (7) so as to be displaceable relative to the tooth carrier (5) in the direction of their longitudinal axis (11), and
   - a cam disc (13) rotatable about the axis of rotation in operative relationship with the teeth (9),
   - wherein the teeth (9) each have a tooth tip (15), wherein a tooth tip width curve (53) extending along the tooth tip (15) and over a tooth width (43) of the tooth (9) is produced at least partially curved in the direction of the longitudinal axis (11) of the tooth, wherein the tooth tip width curve (53) extends on the tooth tip (15) in a plane of the longitudinal axis (11) and the tooth width (43).

2. Gear mechanism (1) according to claim 1, wherein a curved part of the tooth tip width curve (53) is in the form of a logarithmic function or a radius.

3. Gear mechanism (1) according to claim 1 or 2, wherein the tooth tip (15) is recessed in an edge region of the tooth (9) by at least 0.02% and/or at most 2% of the tooth width relative to a maximum height of the tooth tip (15) in the direction of the longitudinal axis (11) of the tooth (9), wherein the tooth tip (15) has the maximum height in a region (47) of the tooth tip (15) central to the tooth width (43).

4. Gear mechanism (1) according to any of the preceding claims, wherein the teeth (9) each have a tooth flank (17) which is produced at least partially curved along a width curve (51) extending over a width (41) of the tooth flank (17).

5. Gear mechanism (1) according to claim 4, wherein the tooth flank (17) has two edge regions (49) along the width curve (51) over the width (41) of the tooth flank (17) and a central region (47) between the two edge regions (49), wherein the tooth flank (17) is recessed inwards in at least one edge region of the two edge regions (49) relative to the central region (47), with reference to the interior of the tooth (9), wherein in particular the at least one edge region is recessed in a direction perpendicular to the tooth flank by at most 1% of a maximum width of the tooth flank (17) relative to the central region (47).

6. Gear mechanism (1) according to claim 5, wherein the width curve (51) is curved in at least one edge region of the two edge regions (49) and is straight in the central region (47) of the tooth flank (17).

7. Gear mechanism (1) according to one of claims 5 or 6, wherein the two edge regions (49) each comprise at least 10% and/or a maximum of 40% of the width (41) of the tooth flank (17).

8. Gear mechanism (1) according to any of claims 4 to 7, wherein the width curve (51) is symmetrical with respect to a midpoint of the width (41) of the tooth flank (17), and/or wherein the teeth (9) each comprise a further tooth flank, wherein the further tooth flank is produced in a mirror-symmetrical manner to the tooth flank (17).

9. Gear mechanism (1) according to any of claims 4 to 8, wherein a curved part of the width curve (51) corresponds to a logarithmic function or a radius correction.

10. Gear mechanism (1) according to any of claims 4 to 9, wherein the width curve (51) extends on the tooth flank (17) and in a sectional plane perpendicular to the tooth flank.

11. Gear mechanism (1) according to any of claims 4 to 10, wherein the tooth flanks of the teeth (9) are produced by grinding.

12. Gear mechanism (1) according to any of claims 4 to 11, wherein a longitudinal curve (55) on the tooth flank (17) and extending perpendicular to the width (41) of the tooth flank (17) is at least partially curved.

13. Tooth (9) for a gear mechanism (1) according to any of the preceding claims,

- wherein the tooth (9) has a tooth tip (15), wherein a tooth tip width curve (53) extending along the tooth tip (15) and over a tooth width (43) of the tooth (9) is at least partially curved in the direction of the longitudinal axis (11) of the tooth (9), in particular convexly curved, wherein the tooth tip width curve (53) extends on the tooth tip (15) in a plane of the longitudinal axis (11) and the tooth width (43).

14. Method (100) for producing a tooth (9) according to claim 13, comprising

- providing a tooth blank of the tooth (9); and
- producing the tooth tip (15) of the tooth (9).

15. Method (100) according to claim 14, wherein the production of the tooth tip (15) comprises grinding the tooth blank, comprising:

- feeding a grinding wheel in the direction of a longitudinal axis of the tooth blank;
- changing the feed of the grinding wheel in the direction of the longitudinal axis of the tooth blank depending on the position of the grinding wheel along the tooth width (43).

**Revendications**

1. Engrenage (1), en particulier engrenage coaxial, comprenant :

une couronne dentée avec une denture intérieure (3),
un porte-dents (5) avec des guidages (7) orientés radialement par rapport à un axe de rotation de l'engrenage,
des dents (9), qui sont reçues dans les guidages (7) pour une mise en prise avec la denture intérieure (3), les dents (9) étant montées coulissantes dans les guidages (7) dans la direction de leur axe longitudinal (11) par rapport au porte-dents (5), et
un disque à cames (13) rotatif autour de l'axe de rotation en liaison fonctionnelle avec les dents (9),
dans lequel les dents (9) présentent chacune une tête de dent (15), une courbe de largeur de tête de dent (53) s'étendant le long de la tête de dent (15) et sur une largeur de dent (43) de la dent (9) étant réalisée au moins partiellement incurvée dans la direction de l'axe longitudinal (11) de la dent, la courbe de largeur de tête de dent (53) s'étendant sur la tête de dent (15) dans un plan de l'axe longitudinal (11) et de la largeur de dent (43).

2. Engrenage (1) selon la revendication 1, dans lequel une partie incurvée de la courbe de largeur de tête de dent (53) s'étend sous la forme d'une fonction logarithmique ou d'un rayon.

3. Engrenage (1) selon la revendication 1 ou 2, dans lequel la tête de dent (15) est en retrait dans une zone de bord de la dent (9) d'au moins 0,02 % et/ou d'au plus 2 % de la largeur de dent par rapport à une hauteur maximale de la tête de dent (15) dans la direction de l'axe longitudinal (11) de la dent (9), la tête de dent (15) présentant la hauteur maximale dans une zone centrale (47) de la tête de dent (15) par rapport à la largeur de dent (43).

4. Engrenage (1) selon l'une des revendications précédentes, dans lequel les dents (9) présentent chacune un flanc de dent (17), qui est réalisé au moins partiellement incurvé le long d'une courbe de largeur (51) s'étendant sur une largeur (41) du flanc de dent (17).

5. Engrenage (1) selon la revendication 4, dans lequel le flanc de dent (17) présente, le long de la courbe de largeur (51), sur la largeur (41) du flanc de dent (17), deux zones de bord (49) et entre les deux zones de bord (49) une zone centrale (47), le flanc de dent (17) étant en retrait dans au moins une zone de bord des deux zones de bord (49) par rapport à la zone centrale (47) vers l'intérieur, par rapport à l'intérieur de la dent (9), en particulier la au moins une zone de bord étant en retrait dans une direction perpendiculaire au flanc de dent d'au plus 1 % d'une largeur maximale du flanc de dent (17) par rapport à la zone centrale (47).

6. Engrenage (1) selon la revendication 5, dans lequel la courbe de largeur (51) s'étend de manière incurvée dans au moins une zone de bord des deux zones de bord (49) et s'étend de manière rectiligne dans la zone centrale (47) du flanc de dent (17).

7. Engrenage (1) selon l'une des revendications 5 ou 6, dans lequel les deux zones de bord (49) comprennent chacune au moins 10 % et/ou au maximum 40 % de la largeur (41) du flanc de dent (17).

8. Engrenage (1) selon l'une des revendications 4 à 7, dans lequel la courbe de largeur (51) s'étend symétriquement par rapport à un milieu de la largeur (41) du flanc de dent (17), et/ou dans lequel les dents (9) comprennent chacune un flanc de dent supplémentaire, le flanc de dent supplémentaire étant réalisé de manière spéculaire par rapport au flanc de dent (17).

9. Engrenage (1) selon l'une des revendications 4 à 8, dans lequel une partie incurvée de la courbe de largeur (51) correspond à une fonction logarithmique ou à une correction de rayon.

10. Engrenage (1) selon l'une des revendications 4 à 9, dans lequel la courbe de largeur (51) s'étend sur le flanc de dent (17) et dans un plan de coupe perpendiculaire au flanc de dent.

11. Engrenage (1) selon l'une des revendications 4 à 10, dans lequel les flancs de dent des dents (9) sont produits par rectification.

12. Engrenage (1) selon l'une des revendications 4 à 11, dans lequel une courbe longitudinale (55) s'étendant sur le flanc de dent (17) et perpendiculairement à la largeur (41) du flanc de dent (17) est au moins partiellement incurvée.

13. Dent (9) pour un engrenage (1) selon l'une des revendications précédentes, dans laquelle la dent (9) présente une tête de dent (15), une courbe de largeur de tête de dent (53) s'étendant le long de la tête de dent (15) et sur une largeur de dent (43) de la dent (9) étant réalisée au moins partiellement incurvée, en particulier incurvée de manière convexe, dans la direction de l'axe longitudinal (11) de la dent (9), la courbe de largeur de tête de dent (53) s'étendant sur la tête de dent (15) dans un plan de l'axe longitudinal (11) et de la largeur de dent (43).

14. Procédé (100) de fabrication d'une dent (9) selon la revendication 13, avec :

   la fourniture d'une ébauche de dent de la dent (9) ; et
   la fabrication de la tête de dent (15) de la dent (9).

15. Procédé (100) selon la revendication 14, dans lequel la fabrication de la tête de dent (15) comprend une rectification de l'ébauche de dent, avec :

   une avance d'une meule dans la direction d'un axe longitudinal de l'ébauche de dent ;
   une modification de l'avance de la meule dans la direction de l'axe longitudinal de l'ébauche de dent en fonction de la position de la meule le long de la largeur de dent (43).

Fig. 1

Fig. 2

Fig. 3

EP 4 641 049 B1

400

Fig. 4

100

110

120

130

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2129935 A2
- DE 102019129667 A1
- US 4308760 A
- DE 102019129662 A1
- DE 102015105523 A1